# EUROPEAN PATENT APPLICATION

(11) **EP 4 848 103 A1**
(43) Date of publication of application: **02.12.2026**
(21) Application number: 25179183.6
(22) Date of filing: 27.05.2025
(51) Int. Cl.: G06F 16/36, G06N 5/022

(54) **DEVICE, DATA STRUCTURE, AND COMPUTER IMPLEMENTED METHOD FOR COMPARING ONTOLOGIES**

(71) Applicant: Robert Bosch GmbH, 70442 Stuttgart (DE)
(72) Inventor: Kharlamov, Evgeny, 81827 München (DE); Chubanov, Sergei, 70197 Stuttgart (DE); Halilaj, Lavdim, 71229 Leonberg (DE); Compagno, Francesco, 38051 Trento (IT)

(57) **Abstract**

A device, a data structure, and a computer implemented method for comparing ontologies, in particular for optimizing or extending a production line or supply chain, wherein the method comprises providing a first knowledge graph representing a first ontology (202), providing a second knowledge graph representing a second ontology (204), providing a third knowledge graph representing a third ontology (206), determining a result of comparing the ontologies, wherein the result comprises a ranking of the second knowledge graph and the third knowledge graph according to a similarity between the first knowledge graph and the second knowledge graph and a similarity between the first knowledge graph and the third knowledge graph.

## Description

### Background

The invention relates to a device, a data structure, and a computer-implemented method for comparing ontologies, in particular for optimizing or extending a production line or supply chain.

In industrial applications, ontologies are used to describe e.g. manufacturing processes, supply chains, and physical devices.

Matching a draft of an ontology to available ontologies enables improving a design of the draft or extending the draft. In industrial applications, the extended draft corresponds for example to an extended production line or an extended supply chain.

Ernesto Jimenez-Ruiz, Bernardo Cuenca Grau, Yujiao Zhou, lan Horrocks. Large-scale Interactive Ontology Matching: Algorithms and Implementation. ECAI 2012, describes a method for ontology matching.

Agmon S. The Relaxation Method for Linear Inequalities. Canadian Journal of Mathematics. 1954;6:382-392. doi:10.4153/CJM-1954-037-2, describes a relaxation method for linear inequalities.

### Disclosure of the invention

The computer method according to the independent claim 1 compares a draft of an ontology to available ontologies. The method enables improving a design of the draft or extending the draft in an automated way.

The computer implemented method for comparing ontologies, in particular for optimizing or extending a production line or supply chain, comprises providing a first knowledge graph representing a first ontology, providing a second knowledge graph representing a second ontology, providing a third knowledge graph representing a third ontology, determining a result of comparing the ontologies, wherein the result comprises a ranking of the second knowledge graph and the third knowledge graph according to a similarity between the first knowledge graph and the second knowledge graph and a similarity between the first knowledge graph and the third knowledge graph. The ontologies are represented as knowledge graphs. Given a knowledge graph representing the draft, the method finds knowledge graphs in a given collection of knowledge graphs representing the available ontologies, which are most relevant to the knowledge graph representing the draft. The method achieves this within a running time comparable to quick sorting applied to the union of the triples belonging to the given knowledge graphs. The method returns matching knowledge graphs as result within a limited time, in particular when the collection of knowledge graphs is very large.

The advantage of the method is that the method solves an optimization problem based on geometric representations of entities of the knowledge graphs and provides an explainable ranking.

The method may comprise determining the first knowledge graph depending on the first ontology, determining the second knowledge graph depending on the second ontology, determining the third knowledge graph depending on the third ontology.

The method may comprise providing the first ontology with atomic words and relations, providing the first knowledge graph with entities that are associated with atomic words according to the first ontology, providing the first knowledge graph with relations according to the relations of the atomic words in the first ontology, providing the second ontology with atomic words and relations, providing the second knowledge graph with entities that are associated with atomic words according to the second ontology, providing the second knowledge graph with relations according to the relations of the atomic words in the second ontology, determining the similarity between the first knowledge graph and the second knowledge graph depending on the atomic words that are associated with entities that are related with the same relation in both knowledge graphs.

For example for efficiently determining the similarities, the method may comprise determining a first sub-graph of entities related by a given relation in the first knowledge graph and a second sub-graph of entities related by the given relation in the second knowledge graph and a third sub-graph of entities related by the given relation in the third knowledge graph, determining a first set of entities that comprises entities of the sub-graphs that are associated with the same atomic words, determining a second set of entities that comprises entities of the sub-graphs that are connected with an entity of the first set of entities by a path of a given length and are associated with the same atomic words, and determining the similarities depending on the first set of entities and the second set of entities.

For example for considering synonyms, the method may comprise finding a synonym for an atomic word that is associated with an entity of the second knowledge graph, associating the synonym with the entity, and determining the similarity between the first knowledge graph and the second knowledge graph depending on the synonym.

For example for efficiently determine the similarities, the method may comprise determining an indication for indicating whether the second knowledge graph comprises an entity in the first set of entities or not, determining an indication for indicating whether the second knowledge graph comprises an entity in the second set of entities or not, and determining the similarity between the first knowledge graph and the second knowledge graph depending on the indications determined for the second knowledge graph, or determining an indication for indicating whether the third knowledge graph comprises an entity in the first set of entities or not, determining an indication for indicating whether the third knowledge graph comprises an entity in the second set of entities or not, and determining the similarity between the first knowledge graph and the third knowledge graph depending on the indications determined for the third knowledge graph.

For example for efficiently determining the similarities, the method may comprise solving a minimum set cover problem or a weighted minimum set cover problem, wherein the problem is defined depending on the indications.

The method may comprise that the first ontology and the first knowledge graph represent the production line, wherein the second ontology and the second knowledge graph represent a first proposed alternative production line, wherein the third ontology and the third knowledge graph represent a second proposed alternative production line, wherein the method comprises optimizing the production line depending on the result, wherein the proposed alternative production line represented by the knowledge graph that is ranked as more similar to the knowledge graph that represents the production line is selected as optimized production line, or wherein the method comprises extending the production line depending on the result, wherein the proposed alternative production line represented by the knowledge graph that is ranked as more similar to the knowledge graph that represents the production line is selected as optimized production line. According to an example, the production line represented by the first ontology exists. The proposed alternative production lines are for example compared to the existing production line. The features of the exisiting production line are known and the proposed alternative production line that is selected is designed closer to having the features of the existing production line than the other proposed alternative production line. The difference between the knowledge graph representing the selected proposed alternative production line and the first knowledge graph reveals the modifications. The difference may be determined. The difference may be output.

The method may comprise that the production line is configured according to the ontology representing the selected proposed alternative production line.

The method may comprise that the first ontology and the first knowledge graph represent the supply chain, wherein the second ontology and the second knowledge graph represent a first proposed alternative supply chain, wherein the third ontology and the third knowledge graph represent a second proposed alternative supply chain, wherein the method comprises optimizing the supply chain depending on the result, wherein the proposed alternative supply chain represented by the knowledge graph that is ranked as more similar to the knowledge graph that represents the supply chain is selected as optimized supply chain, or wherein the method comprises extending the supply chain depending on the result, wherein the proposed alternative supply chain represented by the knowledge graph that is ranked as more similar to the knowledge graph that represents the supply chain is selected as optimized supply chain. According to an example, the supply chain represented by the first ontology exists. The proposed alternative supply chains are for example compared to the existing supply chain. The features of the exisiting supply chain are known and the proposed alternative supply chain that is selected is designed closer to having the features of the existing supply chain than the other proposed alternative supply chain. The difference between the knowledge graph representing the selected proposed alternative supply chain and the first knowledge graph reveals the modifications. The difference may be determined. The difference may be output. The existing supply chain may comprise needed material or components. The proposed alternative supply chains may represent the material or components differen suppliers can supply. This means, the knowledge graph representing the more compatible proposed alternative supply chain is ranked more similar.

A device for comparing ontologies comprises at least one processor and at least one memory, wherein the at least one memory stores instructions that, when executed by the at least one processor, cause the device to execute the method.

A computer program for comparing ontologies comprises computer-readable instructions that, when executed by the computer, cause the computer to execute the method.

A data structure for comparing ontologies comprises at least one data field for a first knowledge graph representing a first ontology, a second knowledge graph representing a second ontology, a third knowledge graph representing a third ontology, and a result of comparing the ontologies, wherein the result comprises a ranking of the second knowledge graph and the third knowledge graph according to a similarity between the first knowledge graph and the second knowledge graph and a similarity between the first knowledge graph and the third knowledge graph.

The data structure may comprise at least one data field for the first ontology, the second ontology, and the third ontology.

The data structure may comprise at least one data field for a first sub-graph of entities related by a given relation in the first knowledge graph, a second sub-graph of entities related by the given relation in the second knowledge graph, a third sub-graph of entities related by the given relation in the third knowledge graph, a first set of entities that comprises entities of the sub-graphs that are associated with the same atomic words, a second set of entities that comprise entities of the first set of entities that are associated with the same atomic words.

The data structure may comprise at least one data field for an indication for indicating whether the second knowledge graph comprises an entity in the first set of entities or not, an indication for indicating whether the second knowledge graph comprises an entity in the second set of entities or not, or in that the data structure comprises at least one data field for an indication for indicating whether the third knowledge graph comprises an entity in the first set of entities or not, an indication for indicating whether the third knowledge graph comprises an entity in the second set of entities or not.

Further examples are derivable from the following description and the drawing. In the drawing:
Fig. 1 schematically depicts a device for comparing a draft of an ontology to available ontologies,
Fig. 2 illustrates a first result of comparing the draft to the available ontologies,
Fig. 3 illustrates a second result of comparing the draft to the available ontologies,
Fig. 4 depicts a flowchart of a method for comparing the draft to the available ontologies,
Fig. 5 schematically depicts a data structure.

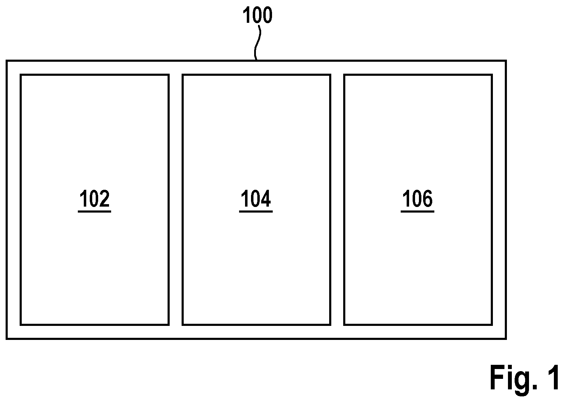

Figure 1 schematically depicts a device 100 for comparing a draft of an ontology to available ontologies.

The device 100 comprises at least one processor 102 and at least one memory 104. The at least one memory 104 is configured for storing instructions that, when executed by the at least one processor 102, cause the device 100 to execute a method for comparing the draft of the ontology to the available ontologies.

The device 100 may comprise an interface 106. The interface 106 is configured for receiving at least one ontology. The interface 106 is configured for outputting a result of comparing the draft of the ontology to available ontologies.

The device 100 is configured to represent the ontologies as knowledge graphs.

A knowledge graph can be viewed as a directed graph with additional information associated with vertices (entities) and arcs.

Let a set of arcs *A*(*G*) be a set of triples of the form <subject, predicate, object> and a set of vertices *V*(*G*) be the set of all entities, i.e., subjects or objects, or isolated entities. Each triple is an arc connecting two entities. The type of the arc (i.e., of the relation between the two entities) is specified by the predicate.

The device 100 is configured to represent the draft of the ontology by a knowledge graph *G*⁰. The device 100 is configured to represent the available ontologies by a collection of knowledge graphs *G^{j}, j* ∈ [*n*].

The device 100 is configured for constructing a ranking of graphs *G^{j}* in the sense of their similarity to *G*⁰.

The device 100 is configured for merging the graphs *G*⁰ and *G*^{j} to obtain a knowledge graph *G.*

This means, the graphs *G*^{j} are subgraphs of the knowledge graph *G.*

The device 100 is configured for representing textual information associated with an entity *x* as a string *T*(*x*)*.* The string *T*(*x*) comprises at least one atomic word. The atomic word is for example a word of a natural language.

For instance, if the entity x corresponds to a class, then the string *T*(*x*) comprises as word or words the class name or information from annotations such as labels or comments.

The device 100 is configured for representing atomic words that are associated with the entity *x* as a set of atomic words *L(x).*

According to an example, in which the atomic words are words of a natural language, the device 100 may be configured for extending the set of atomic words *L(x)* by using a suitable natural language model or chatbot to add words semantically close to those, which are already in *L(x).* A semantically close word is for example a synonym for the atomic word.

According to an example, the device 100 may be configured for extending the knowledge graph G by adding, e.g., synonyms or hyperonyms as new entities related to those in *L(x).*

For instance, the device 100 may be configured for extending the knowledge graph *G* using appropriately formulated natural-language queries to a chatbot.

The device 100 may be configured for representing the ontologies of different languages in the graphs *G*⁰ and *G^{j}.* The device 100 may be configured for representing atomic words from strings of different languages in one language in the set of atomic words *L(x).* The one language may be one of the different languages or another language. The device 100 may be configured for translating the atomic words that are not in the one language into the one language.

An atomic word is not limited to comprise textual information in a natural language. The graphs may be a digital representation of a physical system. The atomic word may comprise a feature of a time series characterizing the physical system.

The device 100 is configured for determining a subgraph *Gₚ* of the knowledge graph *G* induced by a relation *p*.

This means, the subgraph *Gₚ* comprises the triples of the knowledge graph *G* whose predicate is the relation *p*. The subgraph *Gₚ* is for example the set of triples (*x, p, x*') belonging to the knowledge graph *G*, wherein *x* and *x'* are entities of the knowledge graph *G.*

For instance, the knowledge graph *G* comprises a predicate "subSetOf" and the subgraph *Gₚ* comprises all triples comprising the "subSetOf" predicate.

The device 100 is configured for determining an embedding.

The device 100 is configured for determining the embedding depending on a set $D \left({G}^{0}\right) = {∪}_{x ∈ V \left({G}^{0}\right)} L \left(x\right)$

The set *D* is referred to as dictionary.

The device 100 is for example configured for constructing the dictionary *D*(*G*⁰) for an average number *d* of atomic words over an entity *x* ∈ *V*(*G*⁰), in time *O*(*d*|*V*(*G*⁰)|log|*D*(*G*⁰)|) using the following procedure:

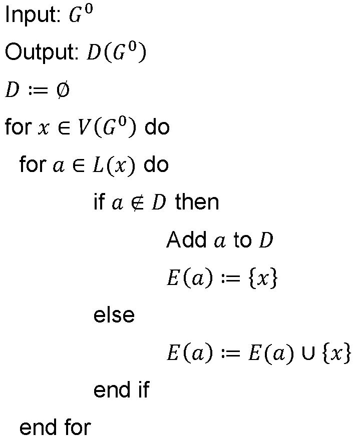

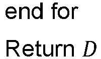

This means, the device 100 is configured for identifying the atomic words associated with the entities of *G*⁰.

For an atomic word *α* E *D(G⁰), E*(*α*) denotes the set of the entities *x* ∈ *V*(*G*⁰) such that *α* ∈ *L*(*x*)*.*

The set of entities *E*(*α*) is constructed in the course of the procedure.

The sub-graphs *Gₚ* can be constructed in time O(|*A*(*G*)|)*.*

The device 100 may be configured for constructing for *α* ∈ *D*(*G*⁰) a first set of entities ${E}_{p}^{1} \left(a\right)$ of entities *x* ∈ *V*(*Gₚ*) such that α ∈ *L*(*x*), and a second set of entities ${E}_{p}^{- 1} \left(a\right)$ of entities *x* ∈ *V*(*Gₚ*) such that *α* ∈ *L*(*x*)*.*

The set of entities ${E}_{p}^{i} \left(a\right)$ is defined recursively as set of entities *x* such that (*x, p, x*') ∈ *G* for some $x ′ ∈ {E}_{p}^{i - 1} \left(a\right)$*.*

The set of entities ${E}_{p}^{- i} \left(a\right)$ defined as set of entities *x* such that (*x', p, x*) ∈ *G* for some $x ′ ∈ {E}_{p}^{- \left(i-1\right)} \left(a\right)$.

The device 100 is configured for constructing a binary matrix *A* defined in the following way:
The rows of the binary matrix *A* correspond to sets of entities ${E}_{p}^{l} \left(a\right)$ containing some *x* ∈ *V*(*G*⁰) and some *x* ∈ *V*(*G^{j}*) for some *j* ∈ [*n*].

The columns of the binary matrix *A* correspond to those graphs *Gⁱ,j* ∈ [*n*]. for which there exist l, p, a, x as above. Let *J* be the set of indices of these graphs.

The entry of the binary matrix *A* on the intersection of the row corresponding to a set of entities ${E}_{p}^{l} \left(a\right)$ and the column corresponding to a graph *G^{j}* is equal to 1 if *G^{j}* has an entity in ${E}_{p}^{l} \left(a\right)$ and otherwise, the entry is equal to 0.

The device 100 is configured for matching the knowledge graph *G*⁰ to the knowledge graphs *G^{j}* by solving a minimum set cover problem: $min \left\{{\sum }_{j ∈ J} {z}_{j} : Az \geq 1 , {z}_{j} ∈ \left\{0, 1\right\} , j ∈ J\right\}$ or a weighted minimum set cover problem: $min \left\{{\sum }_{j ∈ J} {w}_{j} {z}_{j} : Az \geq 1 , {z}_{j} ∈ \left\{0, 1\right\} , j ∈ J\right\}$ wherein w; denotes the weights.

For the weights *wⱼ* = 1 the weighted minimum set cover problem is the minimum set cover problem.

An exemplary weight *wⱼ* is ${w}_{j} = \frac{1}{\left|\left\{x∈V\left({G}^{j}\right):∃\left(l, p, a\right)∈I,x∈{E}_{p}^{l}\left(a\right)\right\}\right|}$

The above problems belong to the class of set-cover problems. Both the minimum cover and the minimum-weight cover problem are NP-hard.

The device 100 may be configured for finding an optimal solution with an integer-programming solver. The integer-programming solver may be used if |*J*| is relatively small.

Otherwise, the device 100 may be configured for applying a heuristic algorithm for finding a reasonably good solution.

The device 100 may be configured with a heuristic based on solving a linear-programming relaxation.

The device 100 may be configured with a fast greedy heuristic algorithm, which sorts the weights *wⱼ*,*j* ∈ *J* in a non-decreasing order. Let *π* be the permutation of the index set *J* corresponding to the non-decreasing order of weights. The device 100 may be configured for ranking according to a first procedure for ranking: 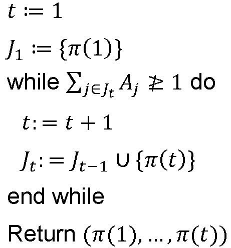 where *π* is the respective permutation, *Jₜ* is the set of indices having been traversed by the respective iteration *t.,* and *Aⱼ* is the respective column of matrix *A,* for each *j.* The procedure for ranking starts with the minimum weight until *Σ*_{*j*∈}*_{Jₜ}, Aⱼ* ≥ 1.

The first procedure for ranking returns the indices of most relevant knowledge graphs and *π* induces the respective ranking.

The algorithm always puts *j* with the minimum *wⱼ* at the first position in the ranking.

A second procedure for ranking that is applicable to the minimum set cover problem additionally comprises an upper bound *ξ* on the optimal value of the respective weighted set-cover problem and an accuracy *ε* > 0: 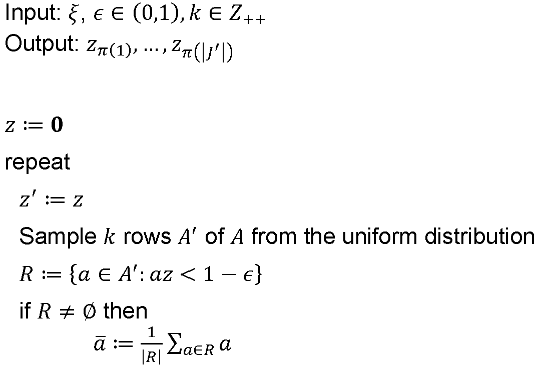 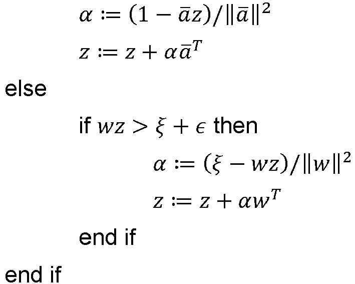 until *z* = *z*' or a given number of iterations is reached $J ′ : = \left\{j∈J:{z}_{j}>0\right\}$
Let *z*_{*π*(1)} ≥ ··· ≥ *z*_{*π*(|*J'*|)}
Return (*π*(1), ... , *π*(*t*)) and the respective weights (*z*_{*π*(1)}, ... , *z*_{*π*(|*J*'|)}
where *ξ* represents a hypothetical upper bound on the optimal value, *ε* represents the accuracy, (*π*(1), ... , *π*(*t*)) is the ranking of a subset of knowledge graphs *Gⁱ,j* ∈ [*n*]. relevant for *G*⁰.

If the upper bound *ξ* is a valid upper bound on the optimal value, then a current solution *z* converges to an approximate solution of the LP relaxation whose objective value is not greater than *ξ* + *ε*.

The sampling performed at every iteration of the second procedure for ranking allows reducing the computational cost and guarantees that with a high probability a given proportion of the classes ${E}_{p}^{i} \left(a\right)$ associated with the knowledge graph *G*⁰ will be covered and a list of most relevant knowledge graphs will be found. This is regulated by a parameter *k* whose higher value leads to a result of a higher quality. An exemplary value of *k* is *k =* 10. The second procedure is a modification of the relaxation method, for solving systems of linear inequalities, of Agmon and Motzkin.

The second procedure for ranking has the advantage that at each iteration the current solution gets closer to all solutions of the LP relaxation, including those being feasible for the original set cover problem, provided that *ξ* is a valid upper bound on the optimal value of the set cover problem. Moreover, after a certain number of iterations the current solution *z* considered by the second procedure for ranking can be used to produce the ranking. So in a practical application it is sufficient to run the algorithm for a given number of iterations rather than to wait until *z* = *z*'. The latter condition can be reached with a guarantee only if *ξ* is a valid upper bound on the optimal value of the set cover problem.

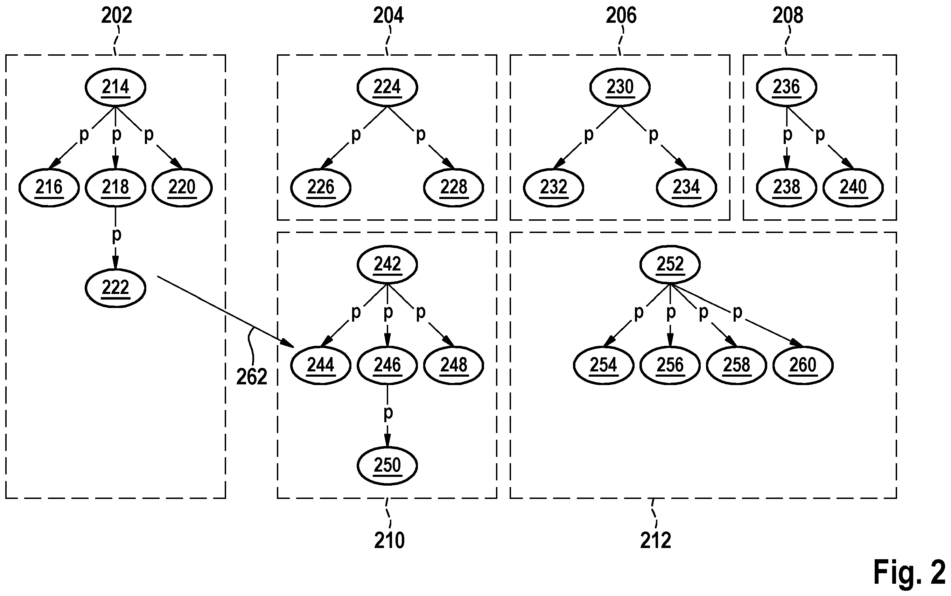

Figure 2 illustrates a draft ontology 202 represented by the knowledge graph *G*⁰ and a collection of ontologies, wherein a first ontology 204 of the collection is represented by a first knowledge graph *G*¹, a second ontology 206 of the collection is represented by a second knowledge graph *G*², a third ontology 208 of the collection is represented by a third knowledge graph *G*², a fourth 210 ontology of the collection is represented by a fourth knowledge graph *G*⁴, and a fifth ontology 212 of the collection is represented by a fifth knowledge graph *G*⁵.

The draft ontology 202 is an example for an ontology that is provided for the comparison to the collection of ontologies. The description is not limited to the ontology 202 being a draft. Any other ontology may be compared to the collection of ontologies or another collection of ontologies, as described for the draft ontology 202 and the collection of ontologies.

The knowledge graph *G*⁰ comprises a first entity 214 that is associated with atomic words (*a, b, c, d*). According to the example, the first entity 214 of the knowledge graph *G*⁰ is a root node of the knowledge graph *G*⁰.

The first entity 214 of the knowledge graph *G*⁰ is related by the relation *p* to a second entity 216 of the knowledge graph *G*⁰, a third entity 218 of the knowledge graph *G*⁰, and to a fourth entity 220 of the knowledge graph *G*⁰.

The second entity 216 of the knowledge graph *G*⁰ is associated with the atomic words (*e, f*). The third entity 218 of the knowledge graph *G*⁰ is associated with the atomic words (*e, g*)*.* The fourth entity 220 of the knowledge graph *G*⁰ is associated with the atomic words (*h, i, j*)*.*

The third entity 218 of the knowledge graph *G*⁰ is related by the relation *p* to a fifth entity 222 of the knowledge graph *G*⁰.

The fifth entity 222 of the knowledge graph *G*⁰ is associated with the atomic words (*e, g*)*.*

The knowledge graph *G*¹ comprises a first entity 224 that is associated with atomic words (*a, b, c, d*). According to the example, the first entity 224 of the knowledge graph *G*¹ is a root node of the knowledge graph *G*¹.

The first entity 224 of the knowledge graph *G*¹ is related by the relation *p* to a second entity 226 of the knowledge graph *G*¹, and a third entity 228 of the knowledge graph *G*¹*.*

The second entity 226 of the knowledge graph *G*¹ is associated with the atomic words (*k, l*)*.* The third entity 228 of the knowledge graph *G*¹ is associated with the atomic word (*w*).

The knowledge graph *G*² comprises a first entity 230 that is associated with atomic words (*a, b, c, d*)*.* According to the example, the first entity 230 of the knowledge graph *G*² is a root node of the knowledge graph *G*²*.*

The first entity 230 of the knowledge graph *G*² is related by the relation *p* to a second entity 232 of the knowledge graph *G*²*,* and a third entity 234 of the knowledge graph *G*²*.*

The second entity 232 of the knowledge graph *G*² is associated with the atomic words (*k, l*). The third entity 234 of the knowledge graph *G*² is associated with the atomic words (*m*, *n*)*.*

The knowledge graph *G*² comprises a first entity 236 that is associated with atomic words (*a, b, c, d*). According to the example, the first entity 236 of the knowledge graph *G*³ is a root node of the knowledge graph *G*³*.*

The first entity 236 of the knowledge graph *G*³ is related by the relation *p* to a second entity 238 of the knowledge graph *G*³, and a third entity 240 of the knowledge graph *G*³.

The second entity 238 of the knowledge graph *G*³ is associated with the atomic words (*k*, *m*)*.* The third entity 240 of the knowledge graph *G*³ is associated with the atomic word (*r*).

The knowledge graph *G*⁴ comprises a first entity 242 that is associated with atomic words (*a, b, c, d*). According to the example, the first entity 242 of the knowledge graph *G*⁴ is a root node of the knowledge graph *G*⁴*.*

The first entity 242 of the knowledge graph *G*⁴ is related by the relation *p* to a second entity 244 of the knowledge graph *G*⁴, a third entity 246 of the knowledge graph *G*⁴, and to a fourth entity 248 of the knowledge graph *G*⁴.

The second entity 244 of the knowledge graph *G*⁴ is associated with the atomic words (*k, l*)*.* The third entity 246 of the knowledge graph *G*⁴ is associated with the atomic words (*m, n*). The fourth entity 248 of the knowledge graph *G*⁴ is associated with the atomic words (*p, q, r*)*.*

The third entity 246 of the knowledge graph *G*⁴ is related by the relation *p* to a fifth entity 250 of the knowledge graph *G*⁴.

The fifth entity 250 of the knowledge graph *G*⁴ is associated with the atomic words (*s, t*)*.*

The knowledge graph *G*⁵ comprises a first entity 252 that is associated with atomic words (*a, b, c, d*)*.* According to the example, the first entity 252 of the knowledge graph *G*⁵ is a root node of the knowledge graph *G*⁵*.*

The first entity 252 of the knowledge graph *G*⁵ is related by the relation *p* to a second entity 254 of the knowledge graph *G*⁵*,* a third entity 256 of the knowledge graph *G*⁵, to a fourth entity 258 of the knowledge graph *G*⁵*,* and to a fifth entity 260 of the knowledge graph *G*⁵.

The second entity 254 of the knowledge graph *G*⁵ is associated with the atomic words (*k, l*)*.* The third entity 256 of the knowledge graph *G*⁵ is associated with the atomic words (*m, n*)*.* The fourth entity 258 of the knowledge graph *G*⁵ is associated with the atomic words (*k*, *m*, *r*)*.* The fifth entity 260 of the knowledge graph *G*⁵ is associated with the atomic words (*s, t*)*.*

The atomic words that are associated with an entity *x* are denoted *L(x).* For example, *L*(*x*) *=* (*a, b, c, d*) for *x* representing the root node of one of the knowledge graphs.

The device 100 is configured to identify the smallest number of knowledge graphs among *Gⁱ,j* ∈ [1, ... , 5] which are most similar to the knowledge graph *G*⁰.

The device 100 is configured to identify the smallest number by solving the minimum set cover problem or the weighted minimum set cover problem.

For the example *Gⁱ,j* ∈ [1, ...,5], the minimum set cover problem has five variables. The column of the matrix *A* corresponding to the knowledge graph *G*⁴ is an all-one vector.

This means, in the first procedure for ranking, it is sufficient to set the variable *z*₄ = 1 and the variables *z*₁, *z*₂, *z*₃, *z*₅ = 0 to obtain the optimal solution 262.

The optimal solution 262 illustrates a first result of comparing the draft ontology to the available ontologies.

The device 100 may be configured to apply the language model to identify at least one synonym for at least one of the atomic words that are associated with entities of the knowledge graphs *G*⁰*,* ..., *G*⁵*.*

The device 100 may be configured to apply the language model to identify at least one synonym for at least one of the atomic words that are associated with entities of the knowledge graph *G*⁰ in the atomic words that are associated with entities of the knowledge graphs *G*¹, ... , *G*⁵*.*

The device 100 may be configured to compare the draft ontology to the collection of ontologies considering at least one of the identified synonyms.

The device 100 is for example configured for adding the synonym of an atomic word that is associated with an entity *x,* to the set *L(x)* of atomic words that is associated with the entity *x*.

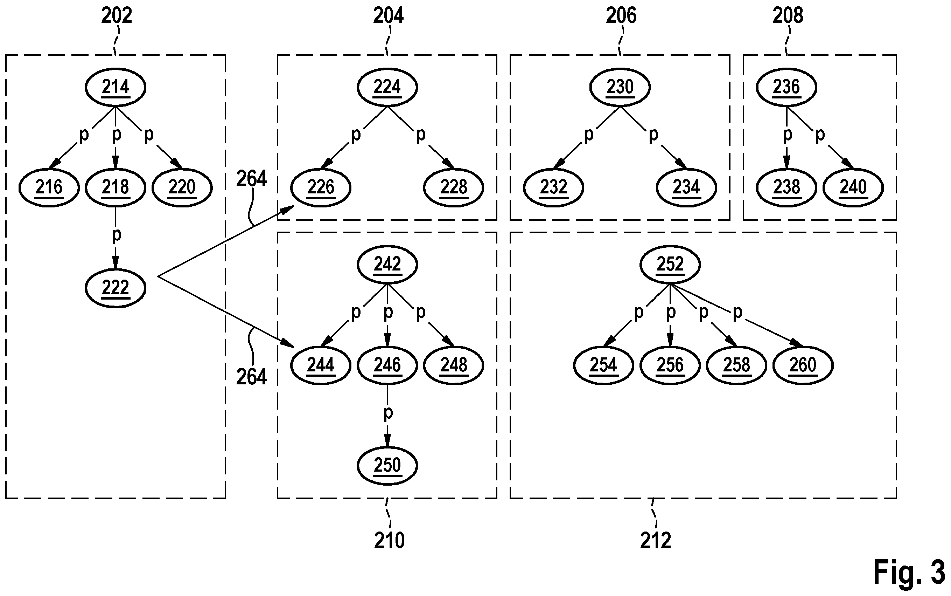

Figure 3 illustrates this for an example, wherein the atomic word *e* is a synonym for the atomic word *w.*

Figure 3 illustrates the draft ontology 202 represented by the knowledge graph *G*⁰ and the collection of ontologies, represented by the knowledge graphs *G^{j},j* ∈ [1, ..., 5]. In contrast to the collection of ontologies depicted in Figure 2, the third entity 228 of the first knowledge graph *G*¹ of the collection depicted in Figure 3 is associated with the atomic word e in addition to the atomic word *w.*

For the example *Gⁱ,j* ∈ [1, ...,5], the minimum set cover problem has five variables. The column of the matrix *A* corresponding to the knowledge graph *G*¹ is an all-one vector and the column of the matrix *A* corresponding to the knowledge graph *G*⁴ is an all-one vector.

This means, in the first procedure for ranking, it is sufficient to set the variable *z*₁ = 1 and the variable *z*₄ = 1 and the variables *z*₂, *z*₃, *z*₅ = 0 to obtain the optimal solution 264.

This means, the knowledge graph *G*¹ is additionally included in the optimal solution 264.

The optimal solution 264 illustrates a second result of comparing the draft ontology to the available ontologies.

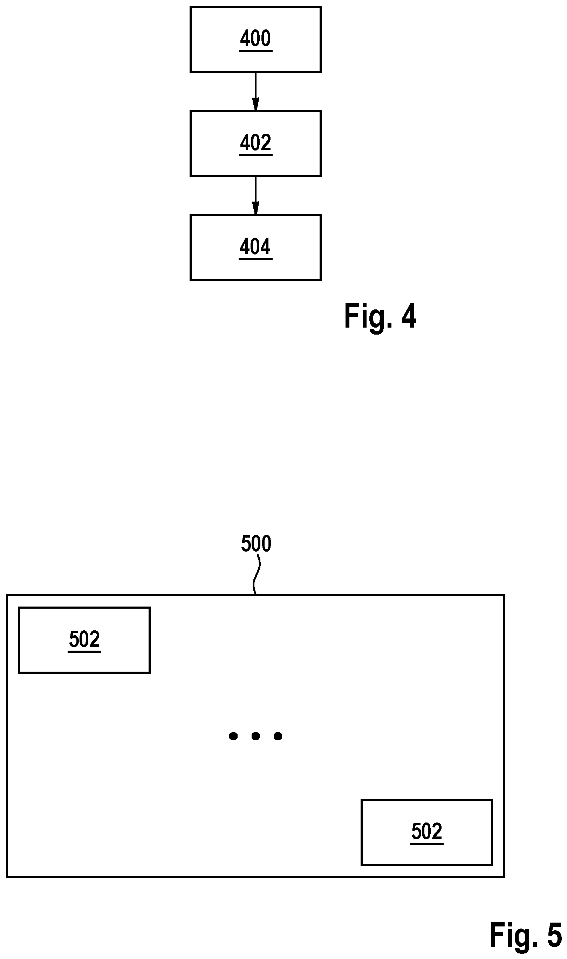

Figure 4 depicts a flowchart of the method for comparing the draft to the available ontologies.

The method comprises a step 400.

The step 400 comprises providing the draft ontology and the collection of ontologies.

The ontologies are for example provided with atomic words and relations.

The method comprises a step 402.

The step 402 comprises providing the knowledge graph *G*⁰ representing the draft ontology 202.

The step 402 comprises providing the collection of knowledge graphs *G*^{j} representing the collection of ontologies.

The knowledge graphs *G*⁰, *G^{j}* are for example determined individually depending on the ontology the respective knowledge graph *G*⁰, *G*^{j} represents. The knowledge graphs *G*⁰, *G*^{j} are for example provided with entities that are associated with atomic words according to the ontology the respective knowledge graph *G*⁰, *G*^{j} represents. The knowledge graphs *G*⁰, *G*^{j} are for example provided with relations according to the relations of the atomic words in the ontology the respective knowledge graph *G*⁰, *G*^{j} represents.

The method comprises a step 404.

The step 404 comprises determining a result of comparing the ontologies.

The result comprises a ranking of the collection of knowledge graphs *G^{j}* representing the collection of ontologies according to a respective similarity between the knowledge graph *G*⁰ representing the draft ontology 202 and the individual knowledge graphs of the collection of knowledge graphs *G^{j}*.

The similarity between two knowledge graphs is for example determined depending on the atomic words that are associated with entities that are related with the same relation in the two knowledge graphs.

The method may comprise determining the similarity between two knowledge graphs depending on a synonym for an atomic word that is associated with an entity of one of the knowledge graphs.

The method may comprise finding the synonym for the atomic word that is associated with the entity, and associating the synonym as additional atomic word with the entity.

Determining the result may comprise determining the sub-graphs *Gₚ* of entities related by a given relation *p* in the knowledge graph *G*⁰ that represents the draft ontology 202, and the collection of knowledge graphs *G^{j}.*

Determining the result may comprise determining the sets of entities ${E}_{p}^{i} \left(a\right)$ and determining the similarities depending on the sets of entities ${E}_{p}^{i} \left(a\right)$*.*

A first set of entities ${E}_{p}^{1} \left(a\right)$ comprises entities of the sub-graphs that are associated with the same atomic words.

A I-th set of entities ${E}_{p}^{l} \left(a\right)$ comprises entities of the sub-graphs that are connected with an entity of the first set of entities ${E}_{p}^{1} \left(a\right)$ by a path of a given length I.

The method may comprise determining an indication for indicating whether a knowledge graph of the collection of knowledge graphs comprises an entity in the first set of entities or not.

The method may comprise determining an indication for indicating whether a knowledge graph of the collection of knowledge graphs comprises an entity in the second set of entities or not.

The method may comprise determining the similarity for at least one knowledge graph of the collection of knowledge graphs depending on the indications determined for the at least one knowledge graph.

The method may comprise determining the similarity by solving a minimum set problem or a weighted minimum set problem that depends on the indications.

An example for the indication is an element at an intersection of a row and a column of the matrix *A.*

An example for determining the similarity depending on the indication is solving the minimum set problem or the weighted minimum set problem that is defined by the matrix *A.*

Figure 5 schematically depicts a data structure 500 for comparing ontologies.

The data structure 500 comprises at least one data field 502 for the knowledge graph representing the draft ontology 202.

The data structure 500 comprises at least one data field 502 for the collection of knowledge graphs.

The data structure 500 comprise at least one data field 502 for the result.

The data structure 500 may comprise at least one data field 502 for the draft ontology 202.

The data structure 500 may comprise at least one data field 502 for the collection of ontologies 202, .... 212.

The data structure 500 may comprise at least one data field 502 for the sub-graphs of entities related by the given relation.

The data structure 500 may comprise at least one data field 502 for the sets of entities ${E}_{p}^{i} \left(a\right)$*.*

The data structure 500 may comprise at least one data field 502 for the indications, in particular the matrix *A.*

A production line example is described below:
According to the production line example the first ontology 202 and the first knowledge graph represent the production line, the second ontology 204 and the second knowledge graph represent a first proposed alternative production line, the third ontology 206 and the third knowledge graph represent a second proposed alternative production line.

The method may comprise optimizing the production line depending on the result.

The proposed alternative production line represented by the knowledge graph that is ranked as more similar to the knowledge graph that represents the production line is for example selected as optimized production line.

The method may comprise extending the production line depending on the result.

The proposed alternative production line represented by the knowledge graph that is ranked as more similar to the knowledge graph that represents the production line is for example selected as optimized production line.

A supply chain example is described below:
According to the supply chain example, the first ontology 202 and the first knowledge graph represent the supply chain, the second ontology 204 and the second knowledge graph represent a first proposed alternative supply chain, and the third ontology 206 and the third knowledge graph represent a second proposed alternative supply chain.

The method may comprise optimizing the supply chain depending on the result, wherein the proposed alternative supply chain represented by the knowledge graph that is ranked as more similar to the knowledge graph that represents the supply chain is selected as optimized supply chain.

The method may comprise extending the supply chain depending on the result, wherein the proposed alternative supply chain represented by the knowledge graph that is ranked as more similar to the knowledge graph that represents the supply chain is selected as optimized supply chain.

## Claims

1. A computer implemented method for comparing ontologies, in particular for optimizing or extending a production line or supply chain, **characterized in that** the method comprises providing (402) a first knowledge graph representing a first ontology (202), providing (402) a second knowledge graph representing a second ontology (204), providing (402) a third knowledge graph representing a third ontology (206), determining (404) a result of comparing the ontologies, wherein the result comprises a ranking of the second knowledge graph and the third knowledge graph according to a similarity between the first knowledge graph and the second knowledge graph and a similarity between the first knowledge graph and the third knowledge graph.

2. The method according to claim 1, **characterized in that** the method comprises determining (402) the first knowledge graph depending on the first ontology (202), determining (402) the second knowledge graph depending on the second ontology (204), determining (402) the third knowledge graph depending on the third ontology (206).

3. The method according to one of the preceding claims, **characterized in that** the method comprises providing (400) the first ontology (202) with atomic words and relations, providing (402) the first knowledge graph with entities that are associated with atomic words according to the first ontology, providing (402) the first knowledge graph with relations according to the relations of the atomic words in the first ontology (202), providing (400) the second ontology (204) with atomic words and relations, providing (402) the second knowledge graph with entities that are associated with atomic words according to the second ontology, providing (402) the second knowledge graph with relations according to the relations of the atomic words in the second ontology (204), determining (404) the similarity between the first knowledge graph and the second knowledge graph depending on the atomic words that are associated with entities that are related with the same relation in both knowledge graphs.

4. The method according to claim 3, **characterized in that** the method comprises determining a first sub-graph of entities related by a given relation in the first knowledge graph and a second sub-graph of entities related by the given relation in the second knowledge graph and a third sub-graph of entities related by the given relation in the third knowledge graph, determining (404-2) a first set of entities that comprises entities of the sub-graphs that are associated with the same atomic words, determining a second set of entities that comprises entities of the sub-graphs that are connected with an entity of the first set of entities by a path of a given length and are associated with the same atomic words, and determining the similarities depending on the first set of entities and the second set of entities.

5. The method according to claim 4, **characterized in that** the method comprises finding a synonym for an atomic word that is associated with an entity of the second knowledge graph, associating the synonym with the entity, and determining the similarity between the first knowledge graph and the second knowledge graph depending on the synonym.

6. The method according to claim 4 or 5, **characterized in that** the method comprises determining an indication for indicating whether the second knowledge graph comprises an entity in the first set of entities or not, determining an indication for indicating whether the second knowledge graph comprises an entity in the second set of entities or not, and determining the similarity between the first knowledge graph and the second knowledge graph depending on the indications determined for the second knowledge graph, or determining an indication for indicating whether the third knowledge graph comprises an entity in the first set of entities or not, determining an indication for indicating whether the third knowledge graph comprises an entity in the second set of entities or not, and determining the similarity between the first knowledge graph and the third knowledge graph depending on the indications determined for the third knowledge graph.

7. The method according to claim 6, **characterized in that** the method comprises solving a minimum set problem or a weighted minimum set problem, wherein the problem is defined depending on the indications.

8. The method according to one of the preceding claims, **characterized in that** the first ontology (202) and the first knowledge graph represent the production line, wherein the second ontology (204) and the second knowledge graph represent a first proposed alternative production line, wherein the third ontology (206) and the third knowledge graph represent a proposed alternative production line, wherein the method comprises optimizing the production line depending on the result, wherein the proposed alternative production line represented by the knowledge graph that is ranked as more similar to the knowledge graph that represents the production line is selected as optimized production line, or wherein the method comprises extending the production line depending on the result, wherein the proposed alternative production line represented by the knowledge graph that is ranked as more similar to the knowledge graph that represents the production line is selected as optimized production line.

9. The method according to claim 8, characterized the production line is configured according to the ontology representing the selected proposed alternative production line.

10. The method according to one of the preceding claims, **characterized in that** the first ontology (202) and the first knowledge graph represent the supply chain, wherein the second ontology (204) and the second knowledge graph represent a first proposed alternative supply chain, wherein the third ontology (206) and the third knowledge graph represent a second proposed alternative supply chain, wherein the method comprises optimizing the supply chain depending on the result, wherein the proposed alternative supply chain represented by the knowledge graph that is ranked as more similar to the knowledge graph that represents the supply chain is selected as optimized supply chain, or wherein the method comprises extending the supply chain depending on the result, wherein the proposed alternative supply chain represented by the knowledge graph that is ranked as more similar to the knowledge graph that represents the supply chain is selected as optimized supply chain.

11. A device (100) for comparing ontologies, in particular for optimizing or extending a production line or supply chain management, **characterized in that** the device (100) comprises at least one processor (102) and at least one memory (104), wherein the at least one memory (104) stores instructions that, when executed by the at least one processor (102), cause the device to execute the method according to one of the preceding claims.

12. A computer program, **characterized in that** the computer program comprises computer-readable instructions that, when executed by the computer, cause the computer to execute the method according to one of the claims 1 to 10.

13. A data structure (500) for comparing ontologies, in particular for optimizing or extending a production line or supply chain, **characterized in that** the data structure comprise at least one data field (502) for a first knowledge graph representing a first ontology (202), a second knowledge graph representing a second ontology (204), a third knowledge graph representing a third ontology (206), and a result of comparing the ontologies, wherein the result comprises a ranking of the second knowledge graph and the third knowledge graph according to a similarity between the first knowledge graph and the second knowledge graph and a similarity between the first knowledge graph and the third knowledge graph.

14. The data structure (500) according to claim 13, **characterized in that** the data structure (500) comprises at least one data field (502) for the first ontology (202), the second ontology (204), and the third ontology (206).

15. The data structure (500) according to claim 13 or 14, **characterized in that** the data structure (500) comprises at least one data field (502) for a first sub-graph of entities related by a given relation in the first knowledge graph, a second sub-graph of entities related by the given relation in the second knowledge graph, a third sub-graph of entities related by the given relation in the third knowledge graph, a first set of entities that comprises entities of the sub-graphs that are associated with the same atomic words, a second set of entities that comprise entities of the first set of entities that are associated with the same atomic words.

16. The data structure (500) according to claim 13 to 15, **characterized in that** the data structure (500) comprises at least one data field (502) for an indication for indicating whether the second knowledge graph comprises an entity in the first set of entities or not, an indication for indicating whether the second knowledge graph comprises an entity in the second set of entities or not, or **in that** the data structure (500) comprises at least one data field (502) for an indication for indicating whether the third knowledge graph comprises an entity in the first set of entities or not, an indication for indicating whether the third knowledge graph comprises an entity in the second set of entities or not.
